# EUROPÄISCHE PATENTSCHRIFT

(11) **EP 1 105 837 B1**
(45) Veröffentlichungstag und Bekanntmachung des Hinweises auf die Patenterteilung: **09.04.2003**
(21) Anmeldenummer: 99941574.8
(22) Anmeldetag: 10.08.1999
(51) Int. Cl.: G06K 19/073, G06K 19/07

(54) **CHIPKARTE MIT ERHÖHTER KARTENSICHERHEIT**
MICROCHIP CARD WITH INCREASED SAFETY
CARTE A PUCE A SECURITE ACCRUE

(30) Priorität: 10.08.1998 DE 19836045; 11.08.1998 DE 19836218; 15.08.1998 DE 19836934
(43) Veröffentlichungstag der Anmeldung: 13.06.2001
(73) Patentinhaber: Kreft, Hans-Diedrich, 21521 Dassendorf (DE)
(72) Erfinder: KREFT, Hans-Diedrich, D-21521 Dassendorf (DE); JENNING, Michael, D-21035 Hamburg (DE)
(74) Vertreter: Mierswa, Klaus
(86) Internationale Anmeldenummer: EP9905841
(87) Internationale Veröffentlichungsnummer: WO00010124

(56) Entgegenhaltungen:
- DE-C- 3 935 364
- GB-A- 2 321 726
- US-A- 4 211 919
- US-A- 5 347 263
- US-A- 5 773 812
- LEMME H.: 'Der Mikrorechner in der Brieftasche' ELEKTRONIK Bd. 29, Nr. 1993, Seiten 70 - 80

## Beschreibung

### Technisches Gebiet:

Die Erfindung betrifft eine Chipkarte mit erhöhter Kartensicherheit, mit wenigstens einem Halbleiterchip mit Speicher, bei der zur Energieversorgung des Chips und zur bidirektionalen Datenübertragung über einen Terminal von und zum Chip verschiedene Übertragungsmittel, wie galvanische Kontakte und/oder mindestens eine kontaktfreie Spule vorgesehen sind, wobei die Energieund Datenübertragung des Chips über erste Kontakte des Terminals zu zweiten Kontakten auf der Chipkarte über elektrische Verbindungsleitungen zwischen den zweiten Kontakten und dem Chip erfolgt, wobei eine elektronische Schaltung vorgesehen ist, die selbsttätig mindestens ein elektrisches Signal liefert, welches indiziert, ob eine elektrische Versorgung der Chipkarte über Kontakte oder über die Spule erfolgt, gemäß dem Oberbegriff des Anspruchs 1

### Stand der Technik und Problemstellung:

Aus der DE-A-3935364 sind die Merkmale des Oberbegriffs des unabhängigen Anspruches 1 bekannt. Die Patentschrift beschreibt eine Chipkarte, die einen elektronischen Chip mit Speicher, Kontakte und kontaktlose Übertragungsmittel, wie Spulen und/oder Kondensatoren, besitzt, die in das Kartenmaterial eingebettet sind und die zur Energieversorgung des Chips über die Kontakte oder kontaktlos mit einem Terminal Energie und bidirektional Daten austauschen. Ein Dioden-Kondensatornetzwerk Teil 2.1.1. ist zur Gleichrichtung und Glättung einer in den Spulen induzierten Wechselspannung an die Spulen angeschlossen, wobei die so erzeugte Gleichspannung U1 zur Spannungsversorgung des Chips Teil 2 dient und an einen ersten Eingang E1 einer Schaltung 2.1.2. geführt ist. Eine über das Kontaktfeld gelieferte Gleichspannung U2 dient ebenfalls zur Spannungsversorgung des Chips und ist an einen zweiten Eingang E2 der Schaltung Teil 2.1.2. geführt. Diese Schaltung gibt an ihrem Ausgang ein Signal E3 ab, welches abhängig vom Vorliegen der Spannungen U1 oder U2 zwei unterschiedliche logische Pegel aufweist, wobei dieses Ausgangssignal E3 eine weitere Schaltung Teil 2.1.3. ansteuert. Dieser Schaltung Teil 2.1.3. werden über eine Leitungsreihe I1 bis IN Signale zur Spannungsversorgung und zum Datenaustausch vom Kontaktfeld her zugeführt, wobei über eine weitere Schaltung Teil 2.1.4. und eine andere Leitungsreihe K1 bis KN Signale zur Spannungsversorgung und zum Datenaustausch von den Spulen her zugeführt werden. Die Schaltung Teil 2.1.3. ist an ihrem Ausgang über eine Leitungsreihe A1 bis An an den Chip Teil 2 angeschlossen, wobei bei Vorliegen der Spannung U1 die Signale von den Spulen und bei Vorliegen der Spannung U2 die Signale vom Kontaktfeld an den Chip Teil 2 durchgeschaltet werden. Dadurch ist die Chipkarte selbsttätig zu entscheiden imstande, ob sie über die Kontaktstrecke oder die kontaktfreie Strecke angesprochen wird und demgemäß unterschiedlich funktioniert. Diese Chipkarte, die auch Dual-Interface-Card oder CombiCard genannt wird, ist ebenso in der Literaturstelle Helmut Lemme, Der Mikrorechner in der Brieftasche, Elektronik 26/1993, Seiten70-80, beschrieben. Diese Chipkarte bietet eine deutlich höhere Zuverlässigkeit als die bloßen kontaktlosen Karten. Des Weiteren ist es aus der DE 44 43 980 bekannt, Spulen und Chip in besonderer Weise zu verbinden.

Durch Messung des elektrischen Leistungsverbrauches oder/und von Spannungsspitzen im Terminal, ist es möglich, Informationen über die Funktionsweise des Chips zu gewinnen. Je nachdem welche Befehle im Chip abgearbeitet werden, ist beispielsweise der Stromverbrauch unterschiedlich. Der Stromverbrauch kann bei einer Kontaktkarte beispielsweise in einem Terminal, in das die Karte eingesteckt wird, gemessen werden, indem eine Stromverbrauchsmessung an den Kontakten der Karte durchführt wird. Es können auch Information über die Funktionsweise eines Chips gewonnen werden, indem Magnetfelder außerhalb des Chips einer Karte gemessen werden. Ebenso können Spannungsspitzen als Auswirkungen von zeitlich veränderlichem Leistungsverbrauch des Chips oder von Chipteilen in der Karte als Informationsquelle über die Arbeitsweise des Chips dienen. Die Ausführung unterschiedlicher Programmbefehle mit unterschiedlichem Stromverbrauch kann eine Ursache für die Spannungsspitzen sein. Auch können solche Spannungsspitzen (Glitches) zwecks Störung des Funktionsablaufes in einem Mikroprozessor zugeführt werden, womit sich zum Beispiel Verschlüsselungsverfahren in den Karten ausspähen lassen; Helmut Lemme: Wie sicher sind Chipkarten?, ELEKTRONIK Nr. 16 vom 4.8.1998, Seite 44 ff.

Durch die GB-A-2 321 726 ist eine elektrische Schaltung zur Regelung zur Konstanthaltung der Energie bei kontaktlos arbeitenden Datenträgern bekannt geworden, welche in unterschiedlichen Abständen zu Terminals gehalten werden, so dass die Energieübertragung zum Datenträger unterschiedlich ist. Zum Ausgleich besitzt der Datenträger einen Empfangsschaltkreis mit einem Gleichrichter, der zwei Ausgänge aufweist. Ein Komparator diskriminiert die Differenz zwischen den beiden Ausgangsspannungen und erzeugt ein Kontrollsignal, dessen Amplitude proportional dieser Differenz ist. Eine Mehrzahl von zuschalt- oder abschaltbaren Blindwiderständen, wie Kondensatoren, werden durch das Kontrollsignal dergestalt beeinflusst, dass für eine Energieoptimierung ein Resonanzschaltkreis mit Widerständen und Spulen zu- oder abgeschaltet werden kann.

Durch die US-A-5,773,812 ist des Weiteren eine Chipkarte mit Kontakten oder Spulen zur kontaktbehafteten oder kontaktlosen Energie- und Datenübertragung bekannt geworden. Die Chipkarte beinhaltet einen auswechselbaren Kontaktblock, der einerseits zum Schutz des Chips und andererseits als sensitives Schaltelement für elektronische Zwecke dient, so dass für eine Fernübertragung die Elektronik des Chips ein- und ausgeschaltet werden kann.

### Technische Aufgabe:

Der Erfindung liegt die Aufgabe zugrunde, Spannungsspitzen, die sich im Chip einer Karte bilden und bei messtechnischer Auswertung außerhalb der Karte Informationen über die Arbeitsweise des Chips geben können, abzublocken, so dass eine Auswertung sicher unterbunden wird; gleichzeitig sollen Ausforschungen der Karte durch Einspeisung von hochfrequenten Signalen ausgeschlossen werden. Zusätzlich sollen auch Datenleitungen und Taktleitungen vor dem Ausforschen per Spannungsspitzen geschützt werden. Mit den angegebenen Mitteln soll die Sicherheit von Chipkarten erhöht werden.

### Offenbarung der Erfindung und deren Vorteile:

Die erfindungsgemäße Lösung der Aufgabe besteht darin, dass in Abhängigkeit vom Signal der elektronischen Schaltung die ansonsten zur kontaktlosen Energie- und Datenübertragung dienende Spule mit ihren beiden elektrischen Anschlusspunkten entweder in einer der Verbindungsleitungen oder mehrere Spulen in zwei Verbindungsleitungen seriell zwischen den Chip und die zweiten Kontakte zuschaltbar sind, wobei die Spule bzw. die Spulen Spannungsspitzen, die mit hohen Frequenzanteilen über die Leitungen von den zweiten Kontakten zum Chip oder umgekehrt übertragen werden abzublocken imstande sind.

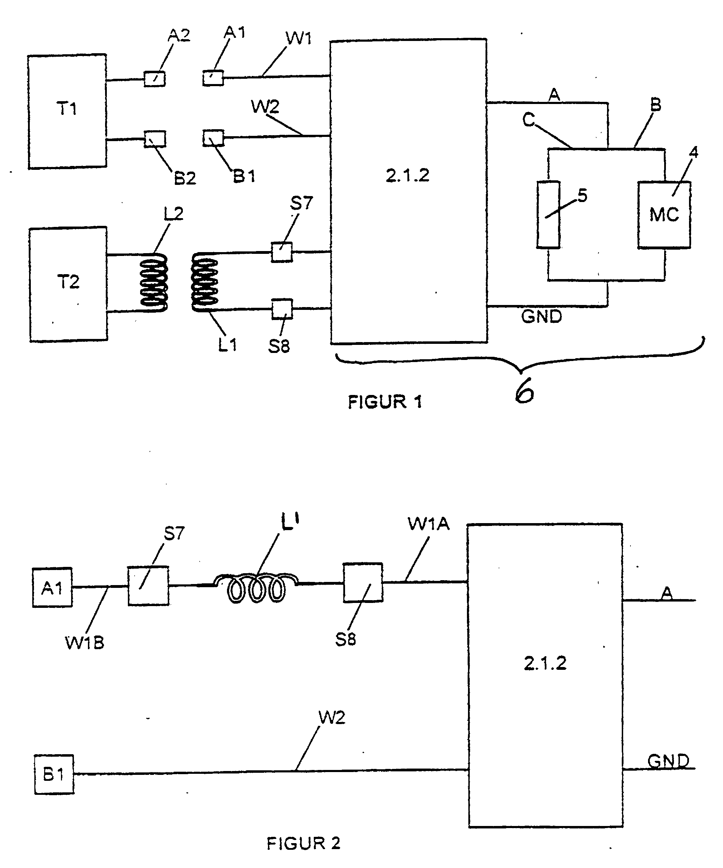

Bei der Erfindung handelt es sich um eine Chipkarte mit einem Chip, in dem unterschiedliche ansteuerbare Bauelemente wie Speicher, Mikroprozessoren enthaltenden sind. Zur Energieversorgung des Chips und zur bidirektionalen Datenübertragung von und zum Chip können unterschiedlichste Mittel dienen. Es sind bei der hier beanspruchten Karte Kontaktverbindungen A1, B1 auf der Karte mit Kontaktverbindungen A2, B2 im Terminal, Figur 1, vorhanden. Es können auch Mittel zur kontaktlosen Datenübertragung in der Form von Spulen L1, L2, siehe Figur 1, zusätzlich vorhanden sein. Es können auch Kondensatoren und/oder sonstige Energie und Datenübertragungen und/oder Mittel vorgesehen sein, wie sie als elektronische, miniaturisierte Elemente zur Aufnahme von Schall oder Druck oder zur kapazitiven Aufnahme elektrischer Signale bei Fingerprintsensoren vorhanden sind. Über die elektrische Leitungsverbindung W1, W2 wird die Energieversorgung des Chips 6, z.B. von Kontakt A1, B1, zur Verfügung gestellt, d.h. es fließt im Regelfall der im Chip verbrauchte Strom durch die Leitungswege W1, W2. Sofern ein Elektronikteil 2.1.2, wie es in der DE 39 35 364 beschrieben ist, nicht vorhanden ist, ist W1 direkt mit der Leitung A verbunden und A kann sich im Chip in mindestens zwei elektrische Leitungswege B, C aufteilen. Über die Kontaktverbindung A1 mit A2 erfolgt die Energieversorgung des Chips 6 aus einem Terminal beispielsweise durch den Pluspol einer Gleichspannungsquelle, wobei B1 mit B2 den dazugehörigen Minuspol, d.h. das Bezugspotential GND bilden. Wird mindestens eine Spule mit Induktivität L1 auf der Karte und/oder im Chip 6 zur Verfügung gestellt, kann diese Induktivität genutzt werden, um Spannungsspitzen, welche bei Zu- oder Abschalten von Leistungsverbrauch im Chip der Karte auftreten, abzublocken. Abblocken ist in dem Sinne zu verstehen, dass der elektrische Widerstand einer Induktivität für hochfrequente Signale extrem hoch ist und diese Signale den induktiven Widerstand nicht überwinden können. Dazu wird eine Spule mit Induktivität L1 mit ihren beiden elektrischen Anschlusspunkten S7, S8 in die Verbindungsleitung W1, d.h. in den galvanischen Verbindungsweg zwischen Kontakt auf der Karte und Chip in der Karte seriell geschaltet. Spannungsspitzen, die mit ihren hohen Frequenzanteilen über die Leitungen W1 und/oder W2 ohne Induktivität bestens übertragen werden, finden nun in dem Übertragungsweg W1 eine hohe Induktivität L1 vor, und werden in dem oben dargestellten Sinne abgeblockt. Die gleiche Wirkung hat die Induktivität auch für hochfrequente Signale, die von außerhalb der Karte, z.B. aus einem Terminal T1 über A2 eingespeist werden. Auch in diesem Falle können hochfrequente Signale in den eingespeisten Spannungsspitzen (Spikes oder Schaltspitzen) die Induktivität L1 nicht überwinden.

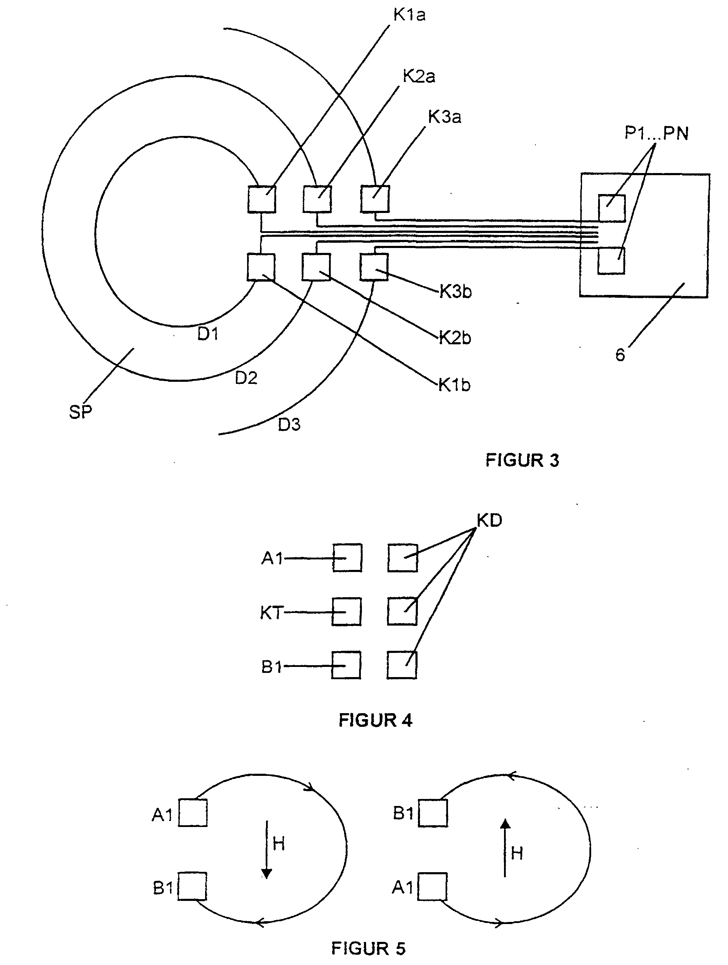

Der Chip 6 kann über Mittel z.B. in Form von elektronischen Schaltern verfügen, mit denen einzelne Spulenwindungen D1, D2, D3, Figur 3, der Spule SP galvanisch getrennt oder verbunden werden können. Hierzu sind die einzelnen Spulenwindungen in den Punkten K1a/K1b, K2a/K2b, K3a,K3b galvanisch getrennt und werden an unterschiedliche Eingangspunkte P1...PN des Chips 6 geführt. Der Chip kann die Punkte gemäß einem Programm oder nach einer fest vorgegebenen logischen Zuordnung verbinden. In der beschriebenen Weise können die einzelnen Spulenwindungen getrennt oder zusammengeschaltet werden, es können aber auch die Spulenwindungen mit spezifischen Chipteilen verbunden werden. Der Chip 6 kann derart einzelne Spulenwindungen selektív zu oder abschalten. Es kann auch der Drehsinn von Spulenwindungen zueinander verändert werden, womit ein eingespeister Strom in den Windungen in entgegengesetzter Richtung fließt. Die Verhältnisse sind symbolisch in Figur 5 dargestellt, sofern per Chipschaltung die Spulenpunkte A1, B1 vertauscht an eine konstante Quelle unveränderter Polung gelegt werden. In diesem Falle ergeben sich Überlagerungen von Magnetfeldern, die sich außerhalb der Spulenwindungen aufheben.

Es ist möglich, eine oder mehrere Spulenwindungen der Spule SL mit den Dateneingängen und/oder Datenausgängen und/oder einem Zeittakteingang, Clockeingang, zu verbinden. In diesem Falle werden die Signale nicht direkt in den Chip eingespeist, sondern über die Spule oder einzelne Windungen geleitet. Damit ergibt sich der Vorteil, dass Spannungsspitzen auf den Datenleitungen oder auf den Zeittaktleitungen ebenfalls abgeblockt werden.

Liegen Spulenwindungen räumlich eng beieinander und befinden sie sich in einem elektromagnetischem Wechselfeld, werden durch Induktion Wechselspannungen in den Spulen erzeugt. Die Spannungen sind entgegengesetzt gerichtet (phasenverschoben), sofern der Drehsinn der Spulen entgegengesetzt ist, d.h. ein Strom bei quasi parallelem Windungsteil in entgegengesetzte Richtung fließt. Von diesem Wissen kann Gebrauch gemacht werden, indem mindestens eine erste und eine zweite Spulenwindung der Spule SP seriell in der Verbindungsleitung W1 oder W2 liegt, wobei die erste zur weiten Spulenwindung einen entgegengesetzten Drehsinn hat, um per elektromagnetischem Wechselfeld eingekoppelte Induktionsspannungen zu kompensieren. Bei galvanischer Verbindung der beiden Spulenwindungen heben sich die eingekoppelten Spannungen infolge ihrer Überlagerung bei Phasendifferenz auf.

Es können Maßnahmen der Filterung von Schwingungen getroffen werden, um bestimmte Datenfrequenzen (Taktzeiten) möglichst ungehindert (bei geringem Widerstand) passieren zu lassen. Die Spule oder einzelne ihrer Windungen können zu diesem Zweck in einer Filterschaltung verwendet werden, um beispielsweise nur bestimmte Frequenzen einer Spannung passieren zu lassen. Derart kann der Eingangswiderstand für Taktfrequenzen gering gehalten werden.

Die Spule SP oder einzelne Windungen können in einer Schwingkreisschaltung verwendet werden. Derart könnte der Chip z.B. seine eigene Frequenz erzeugen, womit ein eigener Takt zur Verfügung stünde, der von der Taktfrequenz abweicht, die vom Terminal zur Verfügung steht.

Einzelne Windungen der Spule SP können zur galvanischen Entkopplung der Übertragung von Daten und/oder Zeittakt genutzt werden. Es sind zu diesem Zweck die einzelnen Spulenwindungen so zu schalten, dass sie sich wie bei einem Transformator zur Daten und/oder Energieübertragung gegenüberliegen. Durch ihre geometrische Nähe sind die Spulenwindungen elektromagnetisch gekoppelt und bilden derart den gewünschten Transformator zwecks rückwirkungsfreier Übertragung von Energie und/oder Daten. Gemäß dieser Beschreibung ist es möglich, Energie und/oder Daten von einem Terminal per galvanischem Kontakt dem Chip einer Karte zur Verfügung zu stellen, wobei über die Spulenwindungen eine vollkommene galvanische Entkopplung erreicht wird. Spannungsspitzen sind weder auf den Datenleitungen noch auf der Taktleitung in den Chip zu übertragen.

Eine vollständige galvanische Entkopplung sämtlicher elektrischer Anschlüsse ergibt sich, wenn die an den Kontakten A1/A2 anliegende Gleichspannung im Chip in eine Wechselspannung gewandelt wird, die anschließend über die Spule SP oder einzelne Windungen der Spule SP dem Chip zur Verfügung steht und im Chip in eine Gleichspannung gewandelt wird. Auf dem Chip sind hierzu bekannte Elemente wie Schaltregler, Gleichrichter erforderlich. Zu Datenentkopplung kann die beschriebene Transformatorschaltung verwendet werden.

Zur Erzeugung einer Wechselspannung aus einer Gleichspannung kann der Chip 6 die Spulenpunkte A1, B1 einer ersten Spulenwindung (Windungsgruppe) per Schaltung vertauschen, so dass der Strom aus einer Gleichspannungsquelle in einem Falle von A1 nach B1 und im anderen von B1 nach A1 durch die Windung(en) fließt. Siehe Figur 5. In benachbarten Spulenwindungen werden derart per elektromagnetischer Kopplung Wechselspannungen erzeugt, die im Chip 6 mit bekannten Mitteln gleichgerichtet werden kann.

Für die Herstellung von Chipkarten kann es zweckmäßig sein, die Spule SP mit ihren Windungen unterhalb der Kontaktflächen anzubringen. Da Kontaktflächen bei der hier dargelegten Erfindung vorhanden sind, der Chip üblicherweise unterhalb der Kontaktflächen montiert ist, können auch die Spulen unterhalb der Chipfläche angebracht werden. Derart bilden Kontakte, Spule und Chip eine mechanische Einheit als Modul. Das Modul stellt sämtliche elektronischen Funktionen bereit, wie sie eine Chipkarte im Falle ihrer bestimmungsgemäßen Nutzung erfüllen soll. Das Modul ist damit in seiner gesamten Funktion vor Auslieferung zu testen und Verbindungen, zwischen Chip und Spule, die beim Kartenhersteller zu bewerkstelligen sind, entfallen.

Es befinden sich Karten im Einsatz, die über Mittel im Chip und/oder auf der Karte verfügen, um sich wahlweise über Kontakte und/oder kontaktfrei mit Energie und Daten zu versorgen. Es können neben den Kontakten zur Energie und/oder Datenversorgung die Mittel der kontaktfreien Übertragung zusätzlich genutzt werden, um den Chip von den Kontakten galvanisch zu trennen. Da Spulenwindungen, Gleichrichter, Kondensatoren bei den kontaktfrei arbeitenden Karten zur Verfügung stehen, können diese auch für eine Kontaktversorgung genutzt werden.

Werden mindestens zwei erste Spulenwindungen für die galvanische Energieversorgung genutzt und werden diese elektrisch gegensinnig von Strom durchflossen, bleibt die Wirkung zum Abblocken von Spannungsspitzen erhalten. Werden diese Spulenwindungen im Chip an einem Punkt zusammengeschaltet, können auch eingekoppelte Spannungen kompensiert werden. Es können weiteren Kontakteingänge für Daten und Takt über eine Anzahl zweiter Spulenwindungen per Transformator Daten und Takt auf eine Anzahl dritter Spulenwindungen einkoppeln. Auf der Karte eng beieinander liegende Spulenwindungen funktionieren als Transformator. Wurden digitale Daten und Signale über Spulenwindungen elektromagnetisch gekoppelt, liegen die gekoppelten Daten in einer analogen Form am Chip vor. Im Chip können aus diesen Daten mit den geeigneten und bekannten Mitteln digitale Daten und Takt gewonnen werden. Da zwischen den ursprünglich per Kontakt eingespeisten Daten und Takt und den neu im Chip generierten keine galvanische Verbindung mehr besteht, sind alle möglichen analogen Signale (Spannungsspitzen), die an den Kontakten vorhanden waren, entkoppelt und zusätzlich durch die Neugeneration in einer ungestörten digitalen Form im Chip vorhanden. Die galvanische Energieversorgung ist durch den gegensinnigen Verlauf der mindestens beiden ersten Windungen frei von eingekoppelten Daten oder Taktsignalen, die über die räumliche Nähe der Spulen auf der Karte erfolgen könnte. Die hier beschriebene Schaltung verhindert das Einspeisen und/oder Auslesen von Spannungsspitzen vom oder zum Chip in vollkommener Weise. Das Ausspähen von Chipfunktionen wird erschwert, die Kartensicherheit erhöht.

Die Spulenwindungsflächen, d.h. die größten Flächen, die die Spulenwindung umschließt, können so liegen, dass sie nicht parallel zur größten Kartenfläche angeordnet sind. Es kann sich z.B. um kleine Stabmagnete handeln, die in das Material einer Karte eingebettet sind.

Es können eine oder mehrere Spulen ineinander verdrillt angeordnet sein, um derart ihre magnetische Kopplung zu erhöhen. Ein Anordnung nebeneinander kann zweckmäßig sein, wenn ein gemeinsamen Träger mit magnetischen Eigenschaften genutzt werden soll. Der Träger kann auch aus einem mechanisch flexiblen Material bestehen, um Biegungen der Karte Stand zu halten.

Ein Terminal T1 nimmt die Eingangsverhältnisse auf einer üblichen Kontaktkarte in einer bestimmten Kombination von elektrischen Parametern wahr. Sollen die im Markt befindlichen Terminals unverändert ihre Funktion erfüllen, und sollen Karten mit den hier beschriebenen Mitteln zum Einsatz kommen, müssen die Chips in der Karte die elektrischen Parameter in einer Weise zur Verfügung stellen, dass im Terminal keine oder nur eine unbedeutende Veränderung festgestellt werden kann. Zu diesem Zweck können Mittel wie Widerstände aber auch Kondensatoren und Schalter eingesetzt werden, die in geeigneter Weise mit den Spulen kombiniert werden. Werden Daten übertragen, wird ein hoher Abschlusswiderstand an den Spulen genügen, da keine Leistung übertragen werden soll. Bei Leistungsübertragung per Takt oder Spule kann ein geregelter Widerstand geschaltet werden.

Die Spule SP, die mit einzelnen Zwischenabgriffen vorliegt, kann in geeigneter Weise mit einem Chip verbunden werden. Die Zwischenabgriffe können als Kontakttierungsflächen auf einem flächigen Trägermaterial wie Folie oder Papier vorliegen. Diese Kontakttierungsflächen der Zwischenabgriffe stimmen mit den Positionen von Kontaktierungsflächen eines Moduls bestehend aus Chip und Kontaktelementen überein. Die Chipanschlüsse eines Chips können unterhalb der Kontakte liegen. Bei einem Zusammenbringen von Spulenkontaktierung und Chip ist eine elektrische Verbindung herstellbar ist. Auf den Kontaktierungsflächen können geeignete Materialien zur elektrischen und/oder mechanischen Verbindung von Modul und Trägerelement vorhanden sein.

Die im Kartenmaterial eingebettete Spule kann mit ihrer Induktivität L1 verwendet werden, um das Ablocken von Spannungsspitzen zu gewährleisten. Als Vorteil ergibt sich bei dieser Spule ihre hohe Induktivität, die erforderlich ist, um eine hohe Energieübertragung von Spule L2 im Terminal T2 zur Kartenspule L1 zu gewährleisten. Eine hohe Induktivität erhöht die Blockwirkung gegen Übertragung von Spannungsspitzen.

Die elektronische Schaltung 2.1.2 des Chips 6 erzeugt ein logisches Signal, welches in Abhängigkeit von dem Auftreten von Spannung an den Kontakten oder an einer Spule logisch "high" oder logisch "low" liefert. Der logische Wert des Signals kann verwendet werden, um beispielsweise Schalter so zu steuern, dass die Punkte S7, S8 einer Spule in den Leitungsweg W1 seriell eingebracht werden. Der Weg W1 ist hierzu zu öffnen und die Spule S1 in die geöffnete Strecke einzubringen. Die Spule ist derart in den elektrischen Verbindungsweg vom Chip in der Karte zum Versorgungskontakt A1 auf der Karte geschaltet. Eine Karte, mit einer Spule, die sowohl kontaktfrei als auch kontaktbehaftet arbeiten kann, ist somit in besonderer Weise gegen das Ausspähen von Spannungsspitzen auf der Karte zu schützen. Die Spule der Karte hat somit zwei Funktionen. In der ersten dient sie als Transformatorspule für Energie und Daten, in der zweiten als induktiver Widerstand zum Ablocken von hochfrequenten Anteilen in Spannungsspitzen. Damit können die im Markt befindlichen Karten mit Namen wie CombiCard oder "Dual-Interface-Card" die Kontaktfunktion einer Karte in besonderer Weise schützen und gleichzeitig die Vorteile des kontaktfreien Betriebes bieten.

Kommen Mittel, die die Wirkungen von zeitlich veränderlichen Leistungsbelastungen und/oder das Auftreten von Spannungsspitzen vermeiden oder ausgleichen, zusätzlich zum Einsatz, ergibt sich der Vorteil, dass eine Aufteilung des Strompfades A in die Pfade B,C zu einem konstanten Strom in A führt, indem das Mittel 5 den Stromverbrauch zu oder abschaltet. Damit ergibt sich ein besonderer Vorteil. Da in A ein konstanter Strom fließ, fließt dieser auch durch die Spule mit der Induktivität L1. Bekanntlich erfolgt in einer Spule Selbstinduktion bei wechselndem Stromfluss, wobei die Selbstinduktion mit wachsendem L1 zunimmt. Selbstinduktion kann zu unerwünschten Effekten, z.B. zusätzlichen Spannungsspitzen, in einer Schaltung führen. Bei konstantem Stromfluss tritt keine Selbstinduktion auf. Liegt die Spule mit L1 in dem Leitungsweg A oder in einer Verlängerung davon, ist die Spule durch den konstanten Stromfluss in A vor Selbstinduktion geschützt. Der konstante Stromfluss in A kann von Schaltspitzen/Spannungsspitzen überlagert sein, die durch Schaltflanken beim Schalten von Leistungen des Mittels 5 und/oder des Mittels 4 verursacht werden. Diese Spannungsspitzen werden in der zuvor beschriebenen Weise durch eine Spule mit Induktivität L1 abgeblockt.

### Kurzbeschreibung der Zeichnung, in der zeigen:

- Figur 1: ein Blockschaltbild mit einem Terminal und einer Chipkarte mit Kontakten sowie einem Terminal mit einer Chipkarte mit Spule
- Figur 2: eine besondere Ausgestaltung der Figur 1
- Figur 3: einzelne Spulenwindungen
- Figur 4: eine symbolische Darstellung der unterschiedlichen Kontaktelemente einer Chipkarte
- Figur 5: zweimal dieselbe Spulenwindung, die in einem Falle an einem Ende mit dem Punkt A1 und am anderen Ende mit B1 und im anderen Falle genau entgegengesetzt mit den Punkten A1, B1 verbunden ist
- Figur 6: eine vergrößerte Darstellung der Leitungswege C und B und
- Figur 7: ein Blockschaltbild mit vorgeschalteten Schutzeinrichtungen gegen Ausspähen.

Bezüglich der Figur 1 ist mit T1 ein Terminal für Chipkarten mit Kontakten A2, B2 und mit T2 ein Terminal mit Spule und Induktivität L2 gekennzeichnet. Der Kontakt A1 stellt über die elektrische Leitung W1 die Versorgungsspannung, der Kontakt B1 über die elektrische Leitung W2 das Bezugspotential GND für einen Chip 6 zur Verfügung. Eine Spule L1 auf der Karte oder auf dem Chip ist mit ihrer Induktivität L1 dargestellt. Diese Spule L1 ist mit den schaltbaren, nämlich schließbaren und öffenbaren, Verbindungen S7, S8 ausgestattet. Das Teil 2.1.2 stellt symbolisch eine Schaltung dar, welche hier die Arbeitsweise über Kontakte A1, B1 oder über Spule L1 indizieren soll; wobei dieses Teil 2.1.2. dem Teil 2.1.2. der DE 39 35 364 entspricht. Ein Mikroprozessor 4 oder MC, erhält seinen Gleichstrom unabhängig von seine Herkunft oder Erzeugung über den Leitungsweg A, wobei A in die Wege B, C aufgespalten sein kann. Mit der Bezugsziffer 5 ist ein Mittel gekennzeichnet, das Leistung bzw. Strom im Weg C in einer Form schalten kann, die zu einem konstanten Stromfluss in Leitung A führt.

Bezüglich der Figur 2 ist eine besondere Ausgestaltung der Figur 1 dargestellt. Mit Hilfe der Information des Mittels 2.1.2 ist eine Spule mit der Induktivität L' seriell in den Leitungsweg W1 geschaltet, womit sich W1 in die Teile W1A zwischen Chip bzw. Teil 2.1.2 und Spule L' und W1B zwischen Spule L' und Ausgangskontakt A1 der Chipkarte zum Terminalkontakt A1 aufteilt. Der Leitungsweg W2 ist durchgehend.

Figur 3 stellt einzelne Spulenwindungen D1, D2, D3 dar, die mit ihren unterschiedlichen Enden an den Punkten K1a, K2a, K3a bzw. K1b, K2b, K3b liegen, wobei diese Punkte mit Punkten P1... PN des Chips 6 verbunden sind.

Figur 4 stellt die unterschiedlichen Kontaktelemente einer Chipkarte symbolisch dar. Mit KD sind die Kontakte zur Datenübertragung, mit KT ist der Kontakt zur Taktübertragung gekennzeichnet. A1, B1 sind die bekannten Kontakte für Gleichstromversorgung.

Figur 5 stellt zweimal dieselbe Spulenwindung dar, die in einem Falle an einem Ende mit dem Punkt A1 und am anderen Ende mit B1 und im anderen Falle genau entgegengesetzt mit den Punkten A1, B1 verbunden ist. Das durch einen Strom erzeugte magnetische Feld H zeigt je nach Verbindung der Punkte in entgegengesetzte Richtung.

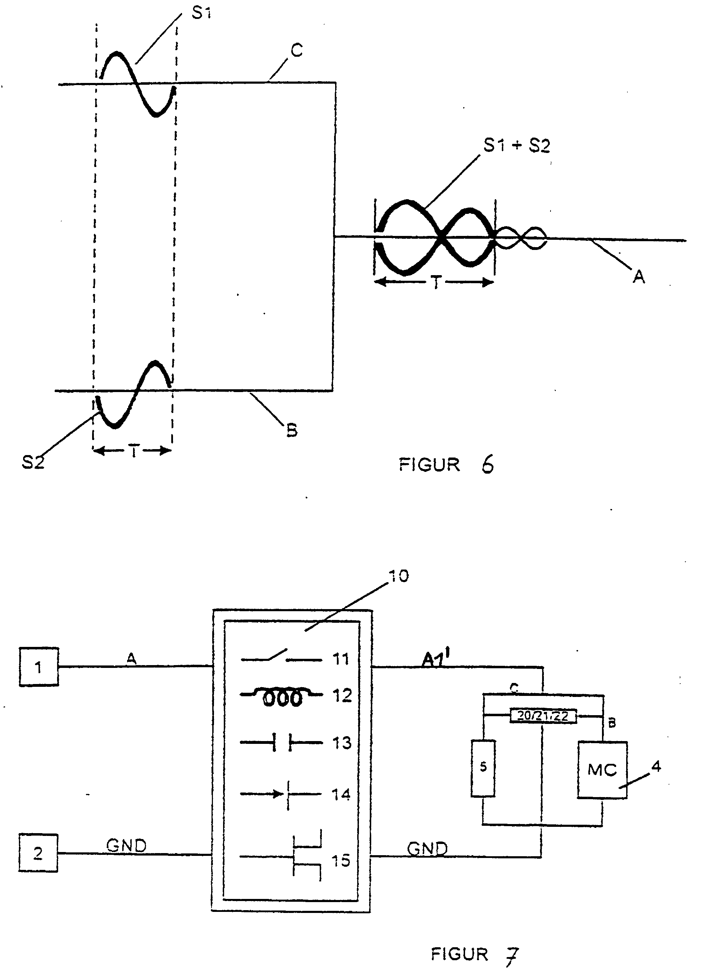

Bezüglich der Figur 7 kontaktieren Kontaktflächen 1, 2 die Chipkarte mit einem Terminal. Über die Leitungsverbindung A ist die Gesamtversorgung des Chips mit Leistung von der Kontaktseite her gewährleistet. Es ist ein Mittel 10 in der Leitungserbindung A vorhanden, welches zum Beispiel Schalter 11, Spule/n 12, Kondensator/en 13, Diode/n 14, elektronisch ansteuerbare Schaltelemente 15, wie Transistoren, Mosfet etc. enthält.

Der Ausgang des Mittels 10 ist eine Leitungsverbindung A1, die sich in die Leitungswege B, C aufteilt. Im Leitungsweg B liegen ein Chipteil mit Mikroprozessor MC und unter Umständen ein weiteres Funktionsbauteil als Verbraucher elektrischer Leistung; im Leitungsweg C liegt das Funktionsbauteil 5 als Verbraucher entsprechend dem Verbrauch im Leitungsweg B. Zwischen den Leitungswegen C und B liegen Mittel 20, 21, 22 gemäß nachfolgender Beschreibung.

In Figur 6 sind in die Leitungswege C und B zwei Spannungsspitzen S1 und S2 eingezeichnet. Da die Strom- bzw. Wirkungsrichtungen in den Leitungswegen C und B gegensinnig geschaltet sind, sind die Phasen der Spannungsspitzen S1 S2 ebenfalls gegensinnig. Werden die Spannungsspitzen S1, S2 an einen gemeinsamen Punkt der Leitung A geführt, überlagern sie sich und ergänzen sich bei gleichzeitigem Auftreten in der Leitungsverbindung A zu null. Die Dauer einer ersten vollen Schwingung ist mit T angegeben.

Die nachfolgenden Ausführungen dienen weiteren Erläuterung der Erfindung sowie der Figuren 6 und 7. Gemäß Figur 7 liegen im Leitungsweg C elektronische Mittel 5, die es gestatten, den Stromverbrauch bzw. Leistungsverbrauch im Leitungsweg B auszugleichen. Bei den Mitteln 5 kann es sich um elektronische Elemente wie Widerstand, Kondensator, Spule, Stromquelle oder eine Kombination aus diesen Elementen handeln. In der Regel wird es sich bei dem Mittel 5 um einen ohmschen Widerstand handeln.

Mit dem Zu- oder Abschalten von elektrischen Leistungsverbrauchern im Strompfad C und/oder B sind Schwingungsvorgänge elektrischer Größen verbunden, deren Frequenzen hoch bzw. gering sind, wenn die Schaltzeiten kurz bzw. lang sind. Die Schwingungsvorgänge treten z.B. als Spannungsspitzen auf, die über elektrische Leitungen A, B, C übertragen werden und deren Auswertung in der Karte oder außerhalb Auskunft über das Zu- oder Abschalten von Leistungen und/oder Verbrauchern gibt. Es können auf dem Chip weitere Mittel vorgesehen sein, die das Auftreten von Strom- und/oder Spannungsspitzen beim Zu- oder Abschalten von Leistungsverbrauchern im Weg C vermeiden oder ausgleichen. Im einfachsten Fall sind Kondensatoren vorgesehen, die z.B. Spannungsspitzen mit dem Bezugspotential verbinden und derart niederohmig, Kondensator als Wechselspannungswiderstand, ableiten. Die Kondensatoren können die Leitungen B, C mit der Masse, dem Bezugspotential, z.B. Punkt 2 in Figur 7, verbinden.

Programmaufrufe in einem Prozessor sind durch einen zeitlichen Ablauf bestimmt. Zu einem bestimmten Programmaufruf zum Zeitpunkt t2 kann der Leistungsverbrauch von Mittel 5 vorhersehbar geändert werden, indem die Änderung zum Zeitpunkt t1 erfolgt, wobei t1 innerhalb eines kleines Zeitintervalls der Größe 2 x dt zwischen t2-dt und t2+dt liegt. Durch diese synchronisierte, "gleichzeitige", Schaltung des Mittel 5 zum Zeitpunkt t2, können Spannungsspitzen quasi zum selben Zeitpunkt erzeugt werden, die in ihrer Phase gemäß Figur 6 um 180 Grad verschoben sind, weshalb sie sich eliminieren, sofern sie über die Leitungen B, C auf die Leitung A gleichzeitig übertragen werden. In Figur 6 ist veranschaulicht, dass im Zweig B die auftretenden Spannungsspitzen genau in ihrer Phase entgegengesetzt zu denen im Zweig C verlaufen. Dies resultiert aus der gegensinnigen Leistungsschaltung von Mittel 5 zum Verbraucher 4.

Sind die Leitungen B und/oder C mit Mitteln zur Filterung von elektromagnetischen Schwingungen versehen, können Spannungsspitzen mit einer bestimmten Grundfrequenz zum Bezugspotential des Chips abgeleitet werden. Es ist beispielsweise ein Filter für die Frequenz Fd durchlässig, z.B. Filter aus den Elementen Kondensatoren, Spulen, kann ein Impuls mit einer Grundschwingung Fd das Filter passieren und kann gegen das Bezugspotential des Chips abgeleitet werden. Zwischen den Leitungen B und C können elektronische Mittel vorgesehen sein, die einen elektronischen Schwingkreis mit einer bestimmten Resonanzfrequenz fr darstellen. Ein solcher Schwingkreis bedarf einer energetischen Anregung, um zu schwingen. Die energetische Anregung verbraucht Energie. Energie steckt in den Spannungsspitzen, die auf den Leitungen B und/oder C vorhanden sind. Diese Spannungsspitzen enthalten eine Grundfrequenz fs. Bei Übereinstimmung von fr mit fs wird der Schwingkreis zum Schwingen angeregt, die Anregungsenergie wird aus den Spannungsspitzen entnommen, womit die Energie der Spannungsspitzen vermindert wird.

Zwischen den Eingängen 1,2 als Leistungsgeber und den Mitteln 4, 5 als Leistungsverbraucher ist ein Mittel zur Erzeugung einer Wechselspannung geschaltet. Diese Wechselspannung wird in einem Mittel in eine Gleichspannung gewandelt, die dem Chip als Leistungsquelle dient. Als Eingangsleistung steht bei einer kontaktbehafteten Chipkarte vorzugsweise eine Gleichstromquelle, bei einer kontaktfreien Chipkarte vorzugsweise eine Wechselstromquelle (Gleichrichtung, der von einem Transformator übertragenen Wechselspannung) zur Verfügung. In beiden Fällen erzeugt das Mittel eine Gleichspannung und einen Gleichstrom an seinem Ausgang, die den Chip versorgen. Sinn dieser Wandlung ist die Entkoppelung der Eingänge 1, 2 von den Schaltungsteilen auf dem Chip, womit ein Ausspähen über Spannungsspitzen vermieden werden soll, die bei Leistungsschaltung über den Stromweg A nachzuweisen sind. In diesem Falle dient das Mittel als Leistungsversorgung des Chips und die externe Leistungsversorgung über 1 dient nur noch indirekt dem Chip als Leistungsversorgung. Um aus der konstanten Leistungsquelle an 1 eine Wechselquelle zu machen, kann das Mittel die Leistungszufuhr über die elektrische Leitung A unterbrechen oder öffnen. Mithin liegt an den elektronischen Teilen in dem Mittel ein Schwingvorgang an. Ist in dem Mittel beispielsweise ein Speicher für elektrische Ladungen (Kapazität) vorhanden, kann aus der Schwingung in dem Mittel eine Gleichspannungsquelle generiert werden. Diese Leistung kann über A1' dem Chip zur Aufrechterhaltung seiner Funktion zur Verfügung gestellt werden. Für die Ausgestaltung des Mittels sind viele Formen denkbar. Es kann aus der Leistung, die über A eingespeist wird, eine periodische (kontinuierlich, periodisch: Sinuswelle; diskontinuierlich, periodisch digitale Rechteckimpulse) Leistungseinspeisung in dem Mittel erzeugt werden. Aus dieser periodischen Einspeisung wird eine konstante Einspeisung im elektrischen Weg A1' erzeugt. Spannungsspitzen werden derart nicht direkt in den Leitungsweg A übertragen, da sie elektrisch entkoppelt sind.

Soll vermieden werden, Information über die Arbeitsweise des Mikroprozessors 4 durch Messung elektrischer Daten an Punkt 1 zu erhalten, können die elektronischen Elemente einer kontaktfreien Energie- und/oder Dateneinspeisung vorteilhaft auch für die Kontaktversorgung genutzt werden. Geschieht die kontaktfreie Einspeisung z.B. durch eine Transformatorschaltung über Spulen, Dioden, Kondensatoren (Elemente in Teil 10) können diese Elemente auch bei einer Gleichspannungseinspeisung genutzt werden, indem die Gleichspannung periodisch unterbrochen wird (in eine Schwingung gewandelt wird) und diese anschließend mit den Mitteln oder einem Teil der Mittel gleichgerichtet wird. Hierzu kann das Mittel elektronische Elemente 10, wie mechanische Schalter 11 und/oder elektronische Schalter 15 und/oder Spulen 12 und/oder Kondensatoren 13 und/oder Dioden und/oder Elemente zur Erzeugung logischer Signale nutzen. Solche Elemente sind in der DE 39 35 364 angegeben und es ist dort auch beschrieben, wie ein logisches Signal erzeugt wird, mit dem unterschieden werden kann, von welchem Eingang (Kontakteingang oder kontaktfreier Eingang) die Versorgung erfolgt. Der Mikroprozessor 4 würde somit nicht direkt mit dem Anschluss 1 verbunden sein, sondern nur indirekt über das Mittel, wie sie bei der Gewinnung von Leistung aus einer kontaktlosen Übertragung von Energie und/oder Daten genutzt werden. Es werden in dem Mittel mindestens einige der Elemente 10 verwendet, um aus einer ersten konstanten Spannungsquelle an A eine zweite konstante Spannungsquelle an A1' zur erzeugen. Diese Schaltung hat den Vorteil das bei einer im Markt bei Fachleuten bekannten CombiCard (Dual Interface Card) die Teile, die zur Gleichrichtung einer Wechselspannung erforderlich sind, auch bei Einspeisung einer Gleichspannung genutzt werden. Da mit dem Mittel mit Hilfe der Elemente 10 auch Nachweise der Funktion des Mikroprozessors 4 eliminiert werden können, ist ein Chip herzustellen, der sowohl kontaktbehaftet als auch kontaktfrei arbeitet und die Möglichkeit der Ausspähung in der beschriebenen Weise vermeidet.

### Gewerbliche Anwendbarkeit und Nützlichkeit:

Die Erfindung ist insbesondere in Chipkarten zur Erhöhung der Kartensicherheit anwendbar. Die Nützlichkeit der Erfindung liegt insbesondere darin, dass durch die erfindungsgemäße Verwendung von Induktivitäten in der Chipkarte das Ausspähen der Karte durch Spannungsspitzen wirkungsvoll verhindert werden kann. Ausforschungen der Karte durch Einspeisung von hochfrequenten Signalen werden ausgeschlossen. Zusätzlich werden auch Daten- und Taktleitungen vor dem Ausforschen per Spannungsspitzen geschützt. Mit den erfindungsgemäßen Mitteln wird somit die Sicherheit von Chipkarten erhöht.

## Patentansprüche

1. Chipkarte mit erhöhter Kartensicherheit, mit wenigstens einem Halbleiterchip (6) mit Speicher, bei der zur Energieversorgung des Chips (6) und zur bidirektionalen Datenübertragung über einen Terminal (T1,T2) von und zum Chip (6) verschiedene Übertragungsmittel, wie galvanische Kontakte (A1,B1) und/oder mindestens eine Spule (L1,SP) vorgesehen sind, wobei die Energie- und Datenübertragung des Chips (6) über erste Kontakte (A2, B2) des Terminals (T1,T2) zu zweiten Kontakten (A1, B1) auf der Chipkarte über elektrische Verbindungsleitungen (W1,W2) zwischen den zweiten Kontakten (A1, B1) und dem Chip (6) erfolgt, wobei eine elektronische Schaltung (2.1.2) vorgesehen ist, die selbsttätig mindestens ein elektrisches Signal liefert, welches indiziert, ob eine elektrische Versorgung der Chipkarte über Kontakte (A1,B1) oder über die Spule (L1, L', SP) erfolgt, **dadurch gekennzeichnet, dass** in Abhängigkeit vom Signal der elektronischen Schaltung (2.1.2) die ansonsten zur kontaktlosen Energie- und Datenübertragung dienende Spule (L1, , SP) mit ihren beiden elektrischen Anschlusspunkten (S7,S8) entweder in einer der Verbindungsleitungen (W1,W2) oder mehrere Spulen (L1, L', SP) in zwei Verbindungsleitungen (W1,W2) seriell zwischen den Chip (6) und die zweiten Kontakte (A1,B1) zuschaltbar sind, wobei die Spule bzw. die Spulen (L1, L', SP) Spannungsspitzen (S1,S2), die mit hohen Frequenzanteilen über die Leitungen (W1,W2) von den zweiten Kontakten (A1,B1) zum Chip (6) oder umgekehrt übertragen werden, abzublocken imstande sind.

2. Chipkarte nach Anspruch 1, **dadurch gekennzeichnet,**
**dass** der Chip (6) Mittel aufweist, einzelne Spulenwindungen (D1,D2,D3) der Spule (L1,L',SP) galvanisch von den verbleibenden Spulenwindungen (D1,D2,D3) zu trennen, so dass der Chip (6) einzelne Spulenwindungen (D1,D2,D3) selektiv zu oder abzuschalten imstande ist.

3. Chipkarte nach Anspruch 1, **dadurch gekennzeichnet,**
**dass** eine oder mehrere Spulenwindungen (D1,D2,D3) der Spule (L1,L',SP) mit dritten Kontakten (KD) von Dateneingängen und/oder Datenausgängen und/oder einem Zeittakteingang (KT) verbunden sind.

4. Chipkarte nach Anspruch 3, **dadurch gekennzeichnet,**
**dass** mindestens eine erste und eine zweite Spulenwindung (D1,D2,D3) der Spule (L1,L',SP) seriell in einer der zwei Verbindungsleitung (W1,W2) geschaltet ist, wobei die erste zur zweiten Spulenwindung einen entgegengesetzten Drehsinn hat, und somit per elektromagnetischem Wechselfeld über die Spulenwindungen eingekoppelte Induktionsspannungen sich bei galvanischer Verbindung der beiden Spulenwindungen infolge ihrer Phasendifferenz aufheben.

5. Chipkarte nach Anspruch 1, **dadurch gekennzeichnet,**
**dass** die Spule (L1,L',SP) oder einzelne Windungen (D1,D2,D3) derselben in einer Filterschaltung oder in einer Schwingkreisschaltung Anwendung finden.

6. Chipkarte nach Anspruch 1, **dadurch gekennzeichnet,**
**dass** einzelne Spulenwindungen (D1, D2, D3) zur galvanischen Entkopplung der Übertragung von Daten und/oder dem Zeittakt genutzt werden, wobei die Spulenwindungen (D1,D2,D3) elektromagnetisch gekoppelt sind und einen Transformator bilden.

7. Chipkarte nach Anspruch 1, **dadurch gekennzeichnet,**
**dass** die Spule (L1,L',SP) mit ihren Windungen (D1,D2,D3) unterhalb der Kontaktflächen der zweiten Kontakte (A1,B1) angebracht ist, wobei zweite Kontakte (A1,B1), Spule (SP) und Chip (6) eine mechanische Einheit als Modul bilden.

8. Chipkarte nach Anspruch 1, **dadurch gekennzeichnet,**
**dass** mindestens zwei erste Spulenwindungen (D1,D2,D3) der Spule (L1,L',SP) für die galvanische Energieversorgung genutzt sind und elektrisch gegensinnig von Strom durchflossen werden, die im Chip (6) an einem Punkt zusammengeschaltet sind, womit sich elektromagnetisch eingekoppelte Spannungen aufheben und galvanisch eingespeiste Spannungsspitzen abgeblockt werden, wobei weitere Kontakteingänge für Daten und Takt über zweite Spulenwindungen (D1,D2,D3) transformatorisch die Daten und den Takt auf dritte Spulenwindungen (D1,D2,D3) einkoppeln und die Daten und der Takt als analoge Signale über die dritten Spulenwindungen (D1,D2,D3) an Eingängen des Chips (6) gefuhrt sind, welcher aus den Daten und dem Takt digitale Daten und einen digitalen Takt generiert, womit die generierten digitalen Daten und Takt frei von Spannungsspitzen sind, wobei die galvanische Energieversorgung durch den gegensinnigen Verlauf der mindestens beiden Windungen frei von eingekoppelten Daten oder Taktsignalen benachbarter Spulenwindungen sind.

9. Chipkarte nach Anspruch 1, **dadurch gekennzeichnet,**
**dass** bei Nutzung der zweiten Kontakte (A1,B1) der Chipkarte zur Energie- und/oder Datenübertragung die Spulen (L1,L',SP) für die kontaktfreie Energie- und/oder Datenübertragung zusätzlich zur galvanischen Trennung des Chips (6) von den zweiten Kontakten genutzt werden.

10. Chipkarte nach Anspruch 1, **dadurch gekennzeichnet,**
**dass** eine oder mehrere Spulen (L1,L',SP) miteinander verdrillt sind oder parallel nebeneinander angeordnet oder so angeordnet sind, dass sie einen gemeinsamen Träger mit magnetischen Eigenschaften nutzen.

11. Chipkarte nach Anspruch 1, **dadurch gekennzeichnet,**
**dass** der Chip (6) die Verbindungen zu einzelnen Spulenwicklungen mit elektronischen Mitteln verbindet, die geeignet sind, einer Elektronik in einem Terminal (T1) vergleichbare elektronische Bedingungen zu simulieren, wie sie vorhanden sind, sofern die einzelnen Spulenwicklungen nicht in die Verbindungsleitungen (W1, W2) geschaltet sind.

12. Chipkarte nach Anspruch 1, **dadurch gekennzeichnet,**
**dass** der Chip (6) Mittel ausweist, einzelne Spulenwindungen (D1,D2,D3) der Spule (L1,SP) galvanisch von den verbleibenden Spulenwindungen (D1,D2,D3) zu trennen, so dass der Chip (6) den Drehsinn der Spulen (L1,SP) zueinander zu verändern imstande ist.

## Claims

1. A chip card with increased card security, having at least one semiconductor chip (6) with a memory in which, for the energy supply of the chip (6) and for the bidirectional data transmission via a terminal (T1, T2) from and to the chip (6), various transmission means are provided such as galvanic contacts (A1, B1) and/or at least one coil (L1, SP), whereby the energy and data transmission of the chip (6) takes place via first contacts (A2, B2) of the terminal (T1, T2) to second contacts (A1, B1) on the chip card via electrical connection lines (W1, W2) between the second contacts (A1, B1) and the chip (6), whereby an electronic circuit (2.1.2) is provided that autonomously supplies at least one electric signal which indicates whether the chip card is being electrically supplied via contacts (A1, B1) or via the coil (L1, L', SP), **characterized in that**,
as a function of the signal of the electronic circuit (2.1.2), the two electric connection points (S7, S8) of the coil (L1, SP) that otherwise serves for contactless energy and data transmission can be serially connected either in one of the connection lines (W1, W2) or several coils (L1, L', SP) in the two connection lines (W1, W2) between the chip (6) and the second contacts (A1, B1), whereby the coil or the coils (L1, L', SP) are capable of blocking glitches (S1, S2) that are transmitted with high frequency components through the lines (W1, W2) from the second contacts (A1, B1) to the chip (6) or vice versa.

2. The chip card according to Claim 1, **characterized in that**
the chip (6) has means to galvanically disconnect individual coil windings (D1, D2, D3) of the coil (L1, L', SP) from the remaining coil windings (D1, D2, D3), so that the chip (6) can selectively switch individual coil windings (D1, D2, D3) on or off.

3. The chip card according to Claim 1, **characterized in that**
one or more coil windings (D1, D2, D3) of the coil (L1, L', SP) are connected to third contacts (KD) of data inputs and/or data outputs and/or to a clock pulse input (KT).

4. The chip card according to Claim 3, **characterized in that**
at least a first and a second coil winding (D1, D2, D3) of the coil (L1, L', SP) are serially connected in one of the two connection lines (W1, W2), whereby the directionality of the first coil winding is opposite from that of the second coil winding, and thus, by means of an electromagnetic alternating field, inductance voltages coupled-in via the coil windings cancel each other out as a result of their phase difference in the case of a galvanic connection of the two coil windings.

5. The chip card according to Claim 1, **characterized in that**
the coil (L1, L', SP) or the individual windings (D1, D2, D3) thereof are used in a filter circuit or in an oscillating circuit.

6. The chip card according to Claim 1, **characterized in that**
individual coil windings (D1, D2, D3) are used for galvanically uncoupling the transmission of data and/or the clock pulse, whereby the coil windings (D1, D2, D3) are coupled electromagnetically and form a transformer.

7. The chip card according to Claim 1, **characterized in that**
the coil (L1, L', SP) with its windings (D1, D2, D3) is installed below the contact surfaces of the second contacts (A1, B1), whereby the second contacts (A1, B1), the coil (SP) and the chip (6) form a mechanical unit as a module.

8. The chip card according to Claim 1, **characterized in that**
at least two first coil windings (D1, D2, D3) of the coil (L1, L', SP) are used for the galvanic energy supply, and current flows through them electrically in opposite directions, whereby said coil windings are connected together in the chip (6) at one point, as a result of which electromagnetically coupled-in voltages cancel each other out and galvanically fed-in glitches are blocked, whereby additional contact inputs for data and the clock pulse couple in the data and the clock pulse via second coil windings (D1, D2, D3) by means of a transformer to third coil windings (D1, D2, D3), and the data and the clock pulse are conducted as analog signals via the third coil windings (D1, D2, D3) to inputs of the chip (6), which generates digital data and a digital clock pulse from the analog data and the clock pulse, as a result of which the generated digital data and the clock pulse are free of glitches, whereby, due to the opposite directionality of the at least two windings, the galvanic energy supply is free of coupled-in data or clock signals of adjacent coil windings.

9. The chip card according to Claim 1, **characterized in that**
when the second contacts (A1, B1) of the chip card are used for the transmission of energy and/or data, the coils (L1, L', SP) for the contactless transmission of energy and/or data are additionally used to galvanically disconnect the chip (6) from the second contacts.

10. The chip card according to Claim 1, **characterized in that**
one or more coils (L1, L', SP) are twisted together with each other or arranged parallel adjacent to each other or arranged in such a way that they use a shared carrier with magnetic properties.

11. The chip card according to Claim 1, **characterized in that**
the chip (6) connects the connections to individual coil windings with electronic means that are suitable to simulate electronic conditions comparable to the electronics in a terminal (T1) of the type that are present if the individual coil windings are not connected to the connection lines (W1, W2).

12. The chip card according to Claim 1, **characterized in that**
the chip (6) has means to galvanically disconnect individual coil windings (D1, D2, D3) of the coil (L1, SP) from the remaining coil windings (D1, D2, D3), so that the chip (6) can change the directionality of the coils (L1, SP) with respect to each other.

## Revendications

1. Carte à puce à sécurité accrue avec au moins une puce à semi-conducteur (6) avec mémoire, sur laquelle sont prévus pour l'alimentation en énergie de la puce (6) et pour la transmission bidirectionnelle des données via un terminal (T1,T2), en provenance de la puce et vers la puce (6) divers moyens de transmission tels que des contacts galvaniques (A1, B1) et/ou au moins une bobine (L1, SP), la transmission d'énergie et des données de la puce (6) se produisant au moyen de premiers contacts (A2, B2) du terminal (T1, T2) vers des deuxièmes contacts (A1, B1) sur la carte à puce à travers les lignes électriques (W1, W2) entre les deuxièmes contacts (A1, B1) et la puce (6), un circuit électronique (2.1.2) étant prévu qui fournit automatiquement au moins un signal électrique, lequel indique si une alimentation électrique de la carte à puce a lieu via des contacts (A1, B1) ou via la bobine (L1, L', SP), **caractérisée en ce que**
en fonction du signal du circuit électronique (2.1.2), la bobine (L1, SP) qui sert autrement à la transmission d'énergie et de données sans contact est connectable en série avec ses deux points de raccordement électrique (S7, S8) ou bien à l'une des lignes de connexion (W1, W2), ou bien plusieurs bobines (L1, L', SP) sont connectables en série à deux lignes de connexion (W1, W2) entre la puce (6) et les deuxièmes contacts (A1, B1), la bobine ou les bobines (L1, L', SP) étant en mesure de bloquer des crêtes de tension (S1, S2), qui sont transmises avec des parts de fréquences élevées via les lignes (W1, W2) à partir des deuxièmes contacts (A1, B1) vers la puce (6) et vice-versa.

2. Carte à puce selon la revendication 1, **caractérisée en ce que**
la puce (6) présente des moyens pour séparer galvaniquement des spires individuelles de bobine (D1, D2, D3) de la bobine (L1, L', SP) des spires de bobine restantes (D1, D2, D3), de sorte que la puce (6) est en mesure de mettre sélectivement en ou hors circuit des spires de bobine individuelles (D1, D2, D3).

3. Carte à puce selon la revendication 1, **caractérisée en ce que**
l'une ou plusieurs des spires de bobine (D1, D2, D3) de la bobine (L1/ L', SP) sont reliées à des troisièmes contacts (KD) d'entrées de données et/ou de sorties de données et/ou à une entrée d'horloge (KT).

4. Carte à puce selon la revendication 3, **caractérisée en ce que**
au moins une première et une deuxième spire de bobine (D1, D2, D3) de la bobine (L1, L', SP) sont connectées en série à l'une des deux lignes (W1, W2), la première spire de bobine ayant un ordre de phase inverse par rapport à la deuxième, de sorte que les tensions d'induction induites par un champ alternatif électromagnétique via les spires de bobine s'annulent lors d'une connexion galvanique des deux spires de bobine en raison de leur différence de phase.

5. Carte à puce selon la revendication 1, **caractérisée en ce que**
la bobine (L1, L', SP) ou des spires individuelles (D1, D2, D3) de celle-ci trouvent leur application dans un circuit-filtre ou dans un montage à circuit oscillant.

6. Carte à puce selon la revendication 1, **caractérisée en ce que**
des spires de bobine individuelles (D1, D2, D3) sont utilisées pour le découplage galvanique de la transmission de données et/ou de la cadence d'horloge, les spires de bobine (D1, D2, D3) étant couplées électromagnétiquement et formant un transformateur.

7. Carte à puce selon la revendication 1, **caractérisée en ce que**
la bobine (L1, L', SP) est disposée avec ses spires (D1, D2, D3) au-dessous de la surface de contact des deuxièmes contacts (A1, B1), les deuxièmes contacts (A1, B1), la bobine (SP) et la puce (6) constituant une unité mécanique en tant que module.

8. Carte à puce selon la revendication 1, **caractérisée en ce que**
au moins deux premières spires de bobine (D1, D2, D3) de la bobine (L1, L', SP) sont utilisées pour l'alimentation en énergie galvanique et sont parcourues en sens inverse par un courant électrique et interconnectées en un point dans la puce (6), ce par quoi les tensions induites électromagnétiquement s'annulent et les crêtes de tension induites galvaniquement sont bloquées, d'autres entrées de contact pour les données et la cadence couplant en transformateur les données et la cadence via les deuxièmes spires de bobines (D1, D2, D3) sur des troisièmes spires de bobines (D1, D2, D3) et les données et la cadence étant amenées sous forme de signaux analogiques par les troisièmes spires de bobines (D1, D2, D3) aux entrées de la puce (6) qui génère à partir des données et de la cadence des données numériques et une cadence numérique, les données numériques et la cadence numérique générées étant donc exemptes de crêtes de tension, l'alimentation en énergie galvanique étant, grâce à la direction opposée des au moins deux spires, exempte de données ou de signaux d'horloge induits des spires de bobines voisines.

9. Carte à puce selon la revendication 1, **caractérisée en ce que**
lors de l'utilisation des deuxièmes contacts (A1, B1) de la carte à puce pour la transmission d'énergie et/ou de données, les bobines (L1, L', SP) destinées à la transmission d'énergie et/ou de données sans contact sont en plus utilisées pour séparer galvaniquement la puce (6) des deuxièmes contacts.

10. Carte à puce selon la revendication 1, **caractérisée en ce que**
une ou plusieurs bobines (L1, L', SP) sont torsadées entre elles ou placées parallèlement côte à côte ou diposées de sorte qu'elles utilisent un support commun ayant des caractéristiques magnétiques.

11. Carte à puce selon la revendication 1, **caractérisée en ce que**
la puce (6) relie les connexions aux spires de bobine individuelles avec des moyens électriques qui sont aptes à simuler des conditions électroniques comparables à l'électronique d'un terminal (T1), telles qu'elles existent lorsque les spires de bobine individuelles ne sont pas connectées aux lignes de connexion (W1, W2).

12. Carte à puce selon la revendication 1, **caractérisée en ce que**
la puce (6) présente des moyens pour séparer galvaniquement des spires de bobine individuelles (D1, D2, D3) de la bobine (L1, SP) des spires de bobines restantes (D1, D2, D3), de sorte que la puce (6) est en mesure de changer l'ordre de phase des bobines (L1, SP) l'un par rapport à l'autre.
